Europäisches Patentamt

European Patent Office

Office européen des brevets

(11) Veröffentlichungsnummer: **0 215 866 B1**

## EUROPÄISCHE PATENTSCHRIFT

(45) Veröffentlichungstag der Patentschrift: **09.09.92**

(51) Int. Cl.5: **D05C 15/00**

(21) Anmeldenummer: **86901846.5**

(22) Anmeldetag: **04.03.86**

(86) Internationale Anmeldenummer:
**PCT/EP86/00113**

(87) Internationale Veröffentlichungsnummer:
**WO 86/05217 (12.09.86 86/20)**

(54) **VERFAHREN ZUM DURCHZIEHEN VON LICHTLEITFASERN DURCH TEXTILIEN UND EINE VORRICHTUNG ZUR DURCHFÜHRUNG DES VERFAHRENS.**

(30) Priorität: **08.03.85 DE 3508252**

(43) Veröffentlichungstag der Anmeldung:
**01.04.87 Patentblatt 87/14**

(45) Bekanntmachung des Hinweises auf die
Patenterteilung:
**09.09.92 Patentblatt 92/37**

(84) Benannte Vertragsstaaten:
**AT BE CH DE FR GB IT LI LU NL SE**

(56) Entgegenhaltungen:
**DE-A- 1 919 058**
**DE-A- 2 029 033**
**US-A- 1 855 175**

**See also references of WO8605217**

(73) Patentinhaber: **STÜVECKE, Claus-Peter**
**Stresemannallee 90**
**W-2000 Hamburg 54(DE)**

Patentinhaber: **GÖTZ, Johann**
**Groden 7**
**W-2212 Brunsbüttel(DE)**

(72) Erfinder: **STÜVECKE, Claus-Peter**
**Stresemannallee 90**
**W-2000 Hamburg 54(DE)**
Erfinder: **GÖTZ, Johann**
**Groden 7**
**W-2212 Brunsbüttel(DE)**

(74) Vertreter: **Ausborn, Peter Dr.**
**Schaarsteinwegsbrücke 2**
**W-2000 Hamburg 11(DE)**

## Beschreibung

Die Erfindung betrifft ein Verfahren zum Durchziehen von Lichtleitfasern durch Gewebe. Die Erfindung betrifft darüber hinaus eine Vorrichtung zur Durchführung des Verfahrens.

Vorbekannte Verfahren und Vorrichtungen zum Einziehen von Fäden in Gewebe dienen dazu, Fäden zu verarbeiten, die eine sehr nachgiebige und biegsame Konsistenz aufweisen. Diese Fäden sind in der Regel aus einer Vielzahl einzelner Fasern zusammengesetzt und sollen dem sie aufnehmenden Gewebe flauschige und anschmiegsame Eigenschaften verleihen. Bei der Verarbeitung von Lichtleitfasern ergeben sich jedoch grundsätzlich andere Probleme. Selbst wenn die verarbeiteten Lichtleitfasern aus einer Mehrzahl von Einzelfasern zusammengesetzt sein sollten, was in der Regel nicht der Fall ist, so ist es für eine Gewährleistung der Lichtleiteigenschaften jedoch zwingend erforderlich, daß sich jede der Einzelfasern bzw. die gesammt Faser ohne Unterbrechung und vom Anfang bis zum Ende der Lichtleitfaser erstreckt. Nur durch eine derartige Ausbildung der Lichtleitfasern können diese Licht, das im Bereich ihres einen Endes auf sie auftrift, in den Bereich ihres anderen Endes weiterleiten. Unterbrechungen der Lichtleitfasern würden dazu führen, daß die Weiterleitung des Lichtes unterbrochen wird. Die mit Hilfe der Lichtleitfasern zur erzielenden Lichteffekte würden mit einem derart verarbeiteten Gewebe gerade nicht erzielt werden können. Auf Grund dieses Erfordernisses der Unterbrechungsfreiheit der Lichtleitfasern im gesammten Bereich ihrer Ausdehnung resultiert eine erheblich höhere Steifigkeit der Lichtleitfasern, als dies beispielsweise bei Wollfäden der Fall ist. Darüber hinaus weisen die Lichtleitfasern im Bereich ihrer sich entlang ihrer Längsachse erstreckenden Oberfläche eine erhebliche Empfindlichkeit gegenüber Beschädigungen auf. Kratzer oder Einkerbungen im Bereich dieser Oberfläche führen zu unerwünschten Reflektionen im Inneren des Lichtleiters und damit zu einer Herabsetzung der Lichtleitfähigkeit.

In der DE- A/1919058 wird ein Verfahren und eine Vorrichtung zur Einbringung eines Florfadens in Schnittflorteppiche beschrieben. Der Florfaden wird in einer Hohlnadel geführt und von dieser umschlossen durch das Gewebe hindurchgeleitet. Der Vortrieb des Florfadens relativ zur Hohlnadel erfolgt durch in die Hohlnadel eingeleitete Preßluft. Ein derartiger Fadentransport ist für die Einbringung von relativ steifen Lichtleitfasern völlig ungeeignet. Im Gegensatz zu den weichen und flauschigen Florfäden weisen die Lichtleitfasern eine relativ feste Konsistenz und eine glatte Oberfläche auf. Die Verwendung eines Preßluftantriebes zur Beförderung der Lichtleitfasern würde somit auf Grund der fehlenden Angriffsflächen zu völlig unbrauchbaren Ergebnissen führen.

In der DE- OS-2029033 wird ein Verfahren sowie eine Vorrichtung zur Herstellung von Garntufts und Garnnoppen beschrieben. Die Tufts und Noppen sind nach deren Einbringung in das Gewebe U-förmig oder schleifenförmig ausgebildet. Die Fäden werden im Gewebe so plaziert, daß sie mit ihren beiden Enden jeweils im Bereich einer Begrenzung des Gewebes aus diesem herausragen und im Bereich der anderen Begrenzung des Gewebes flächig an diesem anliegen. Sowohl das Verfahren als auch die Vorrichtung nach dieser Druckschrift können nur zur Verarbeitung von in hohem Maße biegsamen und elastischen Fäden verwendet werden.

Aufgabe der vorliegenden Erfindung ist es daher, ein Verfahren zum Durchziehen von Lichtleitfasern durch Gewebe anzugeben, das es ermöglicht, die Lichtleitfasern auf maschinellem Wege mit hoher Präzision und Geschwindigkeit bei Aufrechterhaltung der optischen Eigenschaften im Gewebe zu plazieren.

Diese Aufgabe wird erfindungsgemäß dadurch gelöst, daß mindestens eine in zumindest einer Hohlnadel geführte Lichtleitfaser mit der Hohlnadel aus einer Ausgangsposition in Richtung auf das Gewebe geführt, das Gewebe mit der Hohlnadel durchstoßen und das von der Hohlnadel umschlossene Ende der Lichtleitfaser freigegeben wird, indem entweder die Lichtleitfaser vorgeschoben oder die Hohlnadel zurückgezogen und die Lichtleitfaser im Bereich ihrer der Ausgangsposition abgewandten Ausdehnung durch eine Greifvorrichtung festgehalten wird, danach die Hohlnadel in Richtung auf die Ausgangsposition aus dem Gewebe herausgezogen und anschließend die Lichtleitfaser im Bereich ihrer der Ausgangsposition zugewandten Ausdehnung vor einer Spitze der Hohlnadel durchtrennt wird.

Durch dieses Verfahren können die Lichtleitfasern mit hoher Geschwindigkeit im Gewebe positioniert werden. Während des Durchtrittes durch das Gewebe ist die Lichtleitfaser von der Hohlnadel umschlossen und dadurch gegen mechanische Beeinträchtigungen geschützt. Erst nach dem Hindurchtritt durch das Gewebe wird die Lichtleitfaser im Bereich ihres von der Greifvorrichtung zu ergreifenden Endes durch Vorschieben der Lichtleitfasern bzw. Zurückziehen der Hohlnadel freigegeben.

Durch die Vorgabe des Hubweges der Hohlnadel sowie durch die Vorgabe des Trennbereiches ist es möglich, Lichtleitfasern vorgebbarer Länge im Gewebe zu positionieren.

Gemäß einer bevorzugten Ausführungsform der Erfindung wird die Lichtleitfaser auf einer Rolle bevorratet. Dies ermöglicht eine kontinuierliche Durchführung des Verfahrens und damit eine hohe Arbeitsgeschwindigkeit.

Gemäß einer weiteren bevorzugten Ausführungsform der Erfindung wird das zu beaufschlagende Gewebe auf einer Arbeitsplatte geführt. Dies ermöglicht eine sehr genaue Festlegung der Position der Lichtleitfaser in Relation zur vom Gewebe aufgespannten Ebene.

Die bislang bekannten Vorrichtungen zur Einbringung von Fasern in Gewebe sind auf Grund der Materialeigenschaften der Lichtleitfasern nicht zur Durchführung des erfindungsgemäßen Verfahrens geeignet.

Eine weitere Aufgabe der vorliegenden Erfindung ist es daher, eine Vorrichtung anzugeben, die ein Durchziehen mindestens einer Lichtleitfaser durch ein Gewebe ermöglicht.

Diese Aufgabe wird erfindungsgemäß dadurch gelöst, daß mindestens eine Hohlnadel beweglich in ihrer Längsrichtung gelagert ist, daß die Hohlnadel als Führung für mindestens eine Lichtleitfaser ausgebildet ist, daß in einem der Spitze der Hohlnadel gegenüberliegenden Bereich eine ein aus der Hohlnadel herausragendes Ende ergreifende Greifvorrichtung angeordnet ist, und in einem der Greifvorrichtung gegenüberliegenden Bereich eine die Lichtleitfaser durchtrennende Schneidvorrichtung positioniert ist sowie mindestens ein die Vorrichtung steuernder und die Lichtleitfaser vor deren Beaufschlagung mit der Greifvorrichtung vorschiebender oder die Hohlnadel zurückziehender Antrieb vorgesehen ist.

Die Verwendung einer derartigen Vorrichtung ermöglicht ein automatisches Einbringen der Lichtleitfasern in das Gewebe. Die Lichtleitfasern werden deren Oberfläche schonend und mit hoher Geschwindigkeit an den im Gewebe dafür vorgesehenen Stellen und mit vorgebarer Positonierung relativ zur Gewebeoberfläche in diesem plaziert.

Gemäß einer bevorzugten Ausführungsform der Erfindung ist im Bereich einer das Gewebe führenden Arbeitsplatte ein das Gewebe mindestens während des Durchtrittes der Hohlnadel gegen die Arbeitsplatte andrückender Niederhalter vorgesehen. Der Niederhalter verhindert ein Abheben des Gewebes von der Arbeitsplatte während des Durchtrittes der Hohlnadel und gewährleistet somit eine gleichmäßige Länge der Lichtleitfasern relativ zur Gewebeoberfläche.

Weitere Einzelheiten der Erfindung ergeben sich aus der nachfolgenden ausführlichen Beschreibung und den beigefügten Zeichnungen, in denen bevorzugte Ausführungsformen der Erfindung beispielsweise veranschaulicht sind.

In den Zeichnungen zeigen

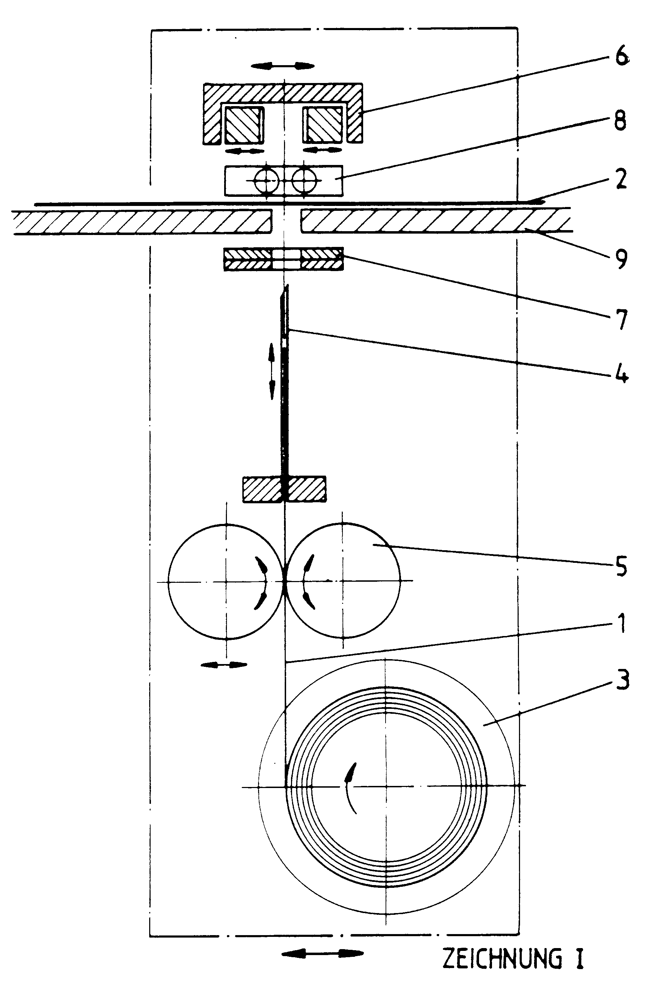

Figur 1: einen Querschnitt durch eine Vorrichtung mit einteiliger Hohlnadel und

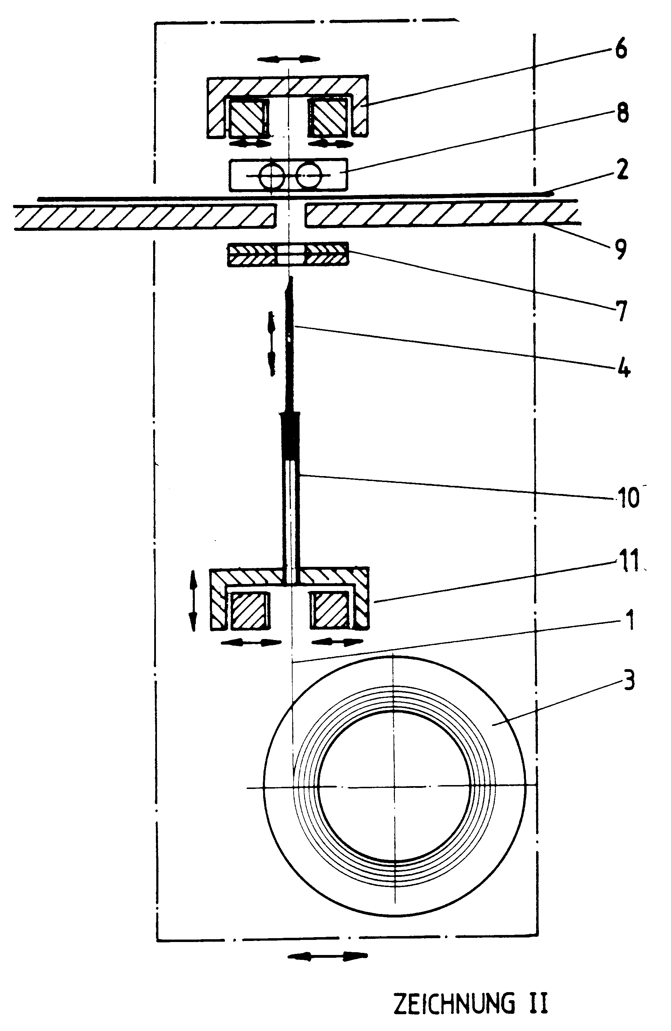

Figur 2: einen Querschnitt durch eine Vorrichtung mit teleskopartig ausgebildeter Hohlnadel.

Die Vorrichtung nach Figur I besteht im wesentlichen aus der Faserrolle (3), der Hohlnadel (4), der Faser-Transportvorrichtung (5), der Greifvorrichtung (6), der Schneidevorrichtung (7), dem Niederhalter (8) und der Arbeitsplatte (9).

Die zu verarbeitenden Textilien (2) werden der Vorrichtung entweder von einer Rolle oder in fertig zugeschnittenen Stücken entlang der Arbeitsplatte (9) zugeführt. Die Vorderseite des Gewebes liegt auf der Arbeitsplatte.

Unterhalb der Arbeitsplatte befinden sich die Hohlnadel (4), die Faser-Transportvorrichtung (5), die Faserrolle (3) und die Schneidevorrichtung (7).

Oberhalb der Arbeitsplatte und damit über der Rückseite des Gewebes befinden sich die Niederhalter (8) und die Greifvorrichtung (6).

Zu Beginn eines Arbeitsganges befindet sich das Ende der Lichtleitfaser (1) in der Hohlnadel (4).

Die in Richtung ihrer Längsachse , d.h. nach "oben" und "unten" bewegliche Hohlnadel (4) wird von unten durch eine entsprechende Öffnung in der Arbeitsplatte durch das daraufliegende Gewebe (2) gestoßen. Dabei verhindert der Niederhalter (8), daß das Gewebe (2) angehoben oder verschoben wird. Die Faser-Transportvorrichtung (5) schiebt anschließend die Lichtleitfaser (1) so weit durch die Hohlnadel vor, daß das Faserende von der Greifvorrichtung (6) erfaßt werden kann.

Nachdem die Lichtleitfaser (1) von der Greifvorrichtung (6) erfaßt worden ist, wird die Hohlnadel (14) wieder in die Ausgangsposition zurückgezogen.

Anschließend wird das Ende der von der Greifvorrichtung (6) erfaßten Lichtleitfaser (1) durch die Greifvorrichtung (6) bis zu einem bestimmten Punkt durchgezogen und dort abgelegt. An dieser Durchtrittsstelle durch das Gewebe (2) wird dann die Faser gegen Verrutschung gesichert, vorzugsweise durch kleben.

Danach wird durch die unterhalb der Arbeitsplatte (9) befindliche Schneidevorrichtung (7) die Lichtleitfaser (1) zwischen der Arbeitsplatte (9) und der zurückgezogenen Hohlnadel (4) in der Form abgetrennt, daß ein bestimmtes Stück der Lichtleitfaser nach unten aus dem Gewebe herausragt. Die Greifvorrichtung (6) kehrt dann zu der Ausgangsposition oberhalb der Hohlnadel (4) zurück. Nachdem das neue Ende der Lichtleitfaser (1), welches nach dem Abtrennen noch etwas aus der Hohlnadel (4) herausragt, durch die Faser-Transportvorrichtung (5) ganz in die Hohlnadel (4) zurückgezogen worden ist, ist die Vorrichtung zu einem neuen Arbeitsgang bereit. Dazu wird die Vorrichtung (Teil 3-8) mit Hilfe von geeigneten Führungen und Antrieben zum nächsten Einstichpunkt geführt.

Vorzugsweise werden die Einstiche in das Gewebe (2) in gerader Linie ausgeführt und die Fasern (1) in Richtung dieser Linie gelegt, so daß gleichzeitig die Fasern am Einstichpunkt gegen Herausrutschen gesichert und die übrigen auf dieser Linie gelegten Fasern fixiert werden.

Wahlweise kann die Maschine statt der Faser-Transportvorrichtung (5) mit einer teleskopartigen Führung der Hohlnadel (4) in einem Führungsrohr (10) und der sich am unterem Ende des Führungsrohres (10) befindlichen Klemmvorrichtung (11) ausgerüstet werden, wie in Figur II dargestellt.

Bei Verwendung einer teleskopisch-beweglichen Hohlnadel (4) mit Führungsrohr (10) und Klemmvorrichtung (11) wird, nachdem die Hohlnadel (4) das Gewebe (2) durchstoßen hat, die Hohlnadel (4) bei geschlossener Klemmvorrichtung (11) soweit zurückgezogen, daß die Greifvorrichtung (6) das freigelegte Ende der Lichtleitfaser (1), dessen Zurückziehen durch die Klemmvorrichtung verhindert wird, erfassen kann. Danach öffnet sich die Klemmvorrichtung, damit die Greifvorrichtung (6) das erfaßte Ende der Lichtleitfaser (1) weiterhin durchziehen und an einem bestimmten Punkt ablegen kann. Nachdem dies geschehen und die Lichtleitfaser (1) unterhalb der Arbeitsplatte (9) durch die dort befindliche Schneidevorrichtung (7) zwischen Arbeitsplatte (9) und zurückgezogener Hohlnadel (4) abgetrennt worden ist, wird die Hohlnadel (4) soweit vorgeschoben, daß das neue Ende der Lichtleitfaser (1) vollkommen in die Hohlnadel (4) gelangt. Danach ist die Vorrichtung zu einemn neuen Arbeitsgang bereit.

Im Bereich des Niederhalters (8) können die Lichtleitfasern (1) leitend und schonend durch den Niederhalter (8) hindurchführende Rollen angeordnet sein. Es ist auch möglich, die Greifvorrichtung (6) und den Niederhalter (8) als einheitliches Teil auszubilden und hierdurch die Anzahl der unabhängig voneinander zu bewegenden mechanischen Teile herabzusetzen. Die Greifvorrichtung (6) kann in horizontaler Richtung beweglich ausgebildet sein.

Die Faser-Transportvorrichtung (5) kann aus zwei Rollen ausgebildet sein, die die Lichtleitfaser (1) jeweils im Bereich von einander abgewandten seitlichen Begrenzungen beaufschlagen und durch aufeinander abgestimmte Rotationsbewegungen die Lichtleitfaser (1) in Längsrichtung der Hohlnadel (4) transportieren. Die Faser-Transportvorrichtung (5) kann auch so ausgebildet sein, daß lediglich eine der Rollen einen Antrieb aufweist und die andere verschwenkbar angeordnet ist. Eine verschwenkbare Anordnung einer der Rollen ermöglicht ein einfaches Einfädeln der Lichtleitfaser (1). Dies ist beispielsweise zweckmäßig, wenn die auf der Faserrolle (3) bevorratete Lichtleitfaser (1) verbraucht ist und das Einsetzen einer neuen Faserrolle (3) erforderlich ist.

Zur Ermöglichung einer leichten Konfektionierung der Länge der in das Gewebe einzubringenden Lichtleitfasern ist es auch möglich, die Schneidevorrichtung (7) in Relation zur Arbeitsplatte (9) verstellbar auszubilden.

**Patentansprüche**

1. Verfahren zum Durchziehen mindestens einer Lichtleitfaser durch ein Gewebe, dadurch gekennzeichent, daß mindestens eine in zumindest einer Hohlnadel (4) geführte Lichtleitfaser (1) mit der Hohlnadel (4) aus einer Ausgangsposition in Richtung auf das Gewebe (2) geführt, das Gewebe (2) mit der Hohlnadel (4) durchstoßen und das von der Hohlnadel (4) umschlossene Ende der Lichtleitfaser (1) freigegeben wird, indem entweder die Lichtleitfaser (1) vorgeschoben oder die Hohlnadel (4) zurückgezogen und die Lichtleitfaser (1) im Bereich ihrer der Ausgangsposition abgewandten Ausdehnung durch eine Greifvorrichtung (6) festgehalten wird, danach die Hohlnadel (4) in Richtung auf die Ausgangsposition aus dem Gewebe (2) herausgezogen und anschließend die Lichtleitfaser (1) im Bereich ihrer der Ausgangsposition zugewandten Ausdehnung vor einer Spitze der Hohlnadel (4) durchtrennt wird.

2. Verfahren nach Anspruch 1 dadurch gekennzeichent, daß die Lichtleitfaser (1) auf einer Rolle (3) bevorratet und das der Rolle (3) abgewandte Ende der Lichtleitfaser (1) zu Beginn des Verfahrens in der Hohlnadel (4) geführt wird.

3. Verfahren nach Anspruch 1 und 2 dadurch gekennzeichnet, daß das Gewebe (2) mit seiner der Ausgangsposition zugewandten Seite auf einer mit Öffnungen für den Durchtritt der Hohlnadel (4) versehenen Arbeitsplatte (9) geführt wird.

4. Verfahren nach Anspruch 1 bis 3 dadurch gekennzeichnet, daß ein Abheben oder Verrutschen des Gewebes (2) von bzw. auf der Arbeitsplatte (9) durch einen Niederhalter (8) verhindert wird.

5. Verfahren nach Anspruch 1 bis 4 dadurch gekennzeichent, daß die Hohlnadel (4) bis in die Ausgangsposition zurückgezogen wird, nachdem die Lichtleitfaser (1) von der Greifvorrichtung (6) erfaßt wurde.

6. Verfahren nach Anspruch 1 bis 5 dadurch gekennzeichnet, daß die Lichtleitfaser (1) durch die Greifvorrichtung (6) seitlich bis zu einem definierten Punkt durchgezogen und dort abgelegt wird.

7. Verfahren nach 1 bis 6 dadurch gekennzeichnet, daß das Faserende nach dem Ablegen durch die Greifvorrichtung (6) durch eine geeignete Vorrichtung fixiert wird.

8. Verfahren nach Anspruch 1 bis 7 dadurch gekennzeichnet, daß die Lichtleitfasern (1) am Durchtrittspunkt durch das Gewebe (2) vorzugsweise durch Kleben gegen Herausrutschen gesichert werden.

9. Verfahren nach Anspruch 1 bis 8 dadurch gekennzeichnet, daß mit der Sicherung der Fasern (1) am Durchtrittspunkt durch das Gewebe (2) andere Fasern in der Lage fixiert werden, die an anderen Punkten das Gewebe (2) durchdringen.

10. Verfahren nach Anspruch 1 bis 9 dadurch gekennzeichnet, daß nach dem Ablegen der Lichtleitfaser (1) an dem definierten Punkt die Faser (1) unterhalb der Arbeitsplatte (9) in einem definierten Abstand von dem Gewebe (2) abgeschnitten wird.

11. Verfahren nach Anspruch 1 bis 10 dadurch gekennzeichnet, daß nach dem Durchtrennen der Lichtleitfaser (1) das neugebildete Ende durch die Faser-Transportvorrichtung (5) in die Hohlnadel (4) zurückgezogen wird.

12. Verfahren nach Anspruch 1 bis 10 gekennzeichnet, daß nach dem Durchtrennen der Lichtleitfaser (1) die Hohlnadel (4) verschoben wird, bis das neue Ende der Lichtleitfaser (1) sich in der Hohlnadel (4) befindet.

13. Verfahren nach Anspruch 1 bis 12 gekennzeichnet, daß mehrere Lichtleitfasern gleichzeitig durch die Hohlnadel geführt werden.

14. Vorrichtung zum Durchziehen mindestens einer Lichtleitfaser durch eine Gewebe von einer Gewebevorderseite auf eine Geweberückseite, dadurch gekennzeichnet, daß mindestens eine Hohlnadel (4) beweglich in ihrer Längsrichtung gelagert ist, daß die Hohlnadel (4) als Führung für mindestens eine Lichtleitfaser (1) ausgebildet ist, daß in einem der spitze der Hohlnadel gegenüberliegenden Bereich eine ein aus der Hohlnadel (4) herausragendes Ende ergreifende Greifvorrichtung (6) angeordnet ist, und in einem der Greifvorrichtung (6) gegenüberliegenden Bereich eine die Lichtleitfaser (1) durchtrennende Schneidevorrichtung (7) positioniert ist sowie mindestens ein die Vorrichtung steuernder und die Lichtleitfaser (1) vor deren Beaufschlagung mit der Greifvorrichtung (6) vorschiebender oder die Hohlnadel (4) zurückziehender Antrieb vorgesehen ist.

15. Vorrichtung nach Anspruch 14, dadurch gekennzeichnet, daß sich zwischen der Schneidevorrichtung (7) und der Greifvor richtung (6) eine das Gewebe (2) führende Arbeitsplatte (9) erstreckt.

16. Vorrichtung nach Anspruch 14 und 15, dadurch gekennzeichnet, daß ein der Greifvorrichtung (6) zugewandter Niederhalter (8) mit Rollen zur Führung der Lichtleitfaser (1) ausgerüstet ist.

17. Vorrichtung nach Anspruch 14 bis 16, dadurch gekennzeichnet, daß die Greifvorrichtung (6) als Niederhalter (8) ausgebildet ist.

18. Vorrichtung nach Anspruch 14 bis 17, dadurch gekennzeichnet, daß die Greifvorrichtung (6) in horizontaler Richtung beweglich angeordnet ist.

19. Vorrichtung nach Anspruch 14 bis 18, dadurch gekennzeichnet, daß eine Faser-Transportvorrichtung (5) zwei Rollen aufweist, von denen die eine angetrieben ist und die andere zum Einfädeln der Lichtleitfaser (1) in die Hohlnadel (4) abklappbar angeordnet ist.

20. Vorrichtung nach Anspruch 14 bis 19, dadurch gekennzeichnet, daß sie mehrere Hohlnadeln (4) aufweist.

21. Vorrichtung nach Anspruch 14 bis 20, dadurch gekennzeichnet, daß sie eine automatische Steuerung aufweist.

22. Vorrichtung nach Anspruch 14 bis 18, dadurch gekennzeichnet, daß sie eine teleskopisch bewegliche Hohlnadel (4) in einem Führungsrohr (10) und eine am unterem Ende des Führungsrohrs angeordnete und die Lichtleitfaser (1) beim Zurückziehen der Hohlnadel (4) festhaltende Klemmvorrichtung (11) aufweist.

23. Vorrichtung nach Anspruch 14 bis 22, dadurch gekennzeichnet, daß die Schneidevorrichtung (7) höhenverstellbar ausgebildet ist.

**Claims**

1. Process for drawing at least one optical fiber through a fabric, characterized in that at least one optical fiber (1) guided in at least one hollow needle (4) is passed with the hollow needle (4) from a starting position in the direction of the fabric (2). The fabric (2) is then penetrated with the hollow needle (4) and the end of the optical fiber (1), surrounded by the hollow needle (4), is exposed in that either the optical fiber (1) is pushed forward or the hollow needle (4) is retracted and the optical fiber (1) is secured in the area of its stretch facing away from the starting position by a grasping device (6). After this the hollow needle (4) is drawn back from the fabric (2) in the direction of the starting position and subsequently the optical fiber (1) is severed in the area of its stretch facing the starting position in front of a tip of the hollow needle (4).

2. Process in accordance with Claim 1, characterized in that the optical fiber (1) is stocked on a spool (3) and that the end of the optical fiber (1) facing away from the spool (3) is guided in the hollow needle (4) at the start of the process.

3. Process in accordance with Claims 1 and 2, characterized in that the side of the fabric (2) facing the starting position is guided on a working platform (9), which is provided with apertures for the penetration of the hollow needle (4).

4. Process in accordance with Claims 1 to 3, characterized in that the fabric (2) is prevented from lifting up from the working platform (9) or slipping on it by a holding-down device (8).

5. Process in accordance with Claims 1 to 4, characterized in that the hollow needle (4) is drawn back to the starting position after the optical fiber (1) has been gripped by the grasping device (6).

6. Process in accordance with Claims 1 to 5, characterized in that the optical fiber (1) is drawn through laterally by the grasping device (6) to a predetermined point and deposited there.

7. Process in accordance with Claims 1 to 6, characterized in that the end of the fiber is fixed in position by a suitable device after being deposited by the grasping device (6).

8. Process in accordance with Claims 1 to 7, characterized in that the optical fibers (1) are secured against slipping out at the point of penetration of the fabric (2), preferably by sticking.

9. Process in accordance with Claims 1 to 8, characterized in that with the securing of the fibers (1) at the point of penetration of the fabric (2), other fibers which penetrate the fabric (2) at other points are fixed in position.

10. Process in accordance with Claims 1 to 9, characterized in that after the optical fiber (1) is deposited at the predetermined point, the optical fiber (1) is cut off underneath the working platform (9) at a predetermined distance from the fabric (2).

11. Process in accordance with Claims 1 to 10, characterized in that after severing of the optical fiber (1), the newly-formed end is drawn back into the hollow needle (4) by the fiber-transport device (5).

12. Process in accordance with Claims 1 to 10, characterized in that after severing of the optical fiber (1), the hollow needle (4) is displaced until the new end of the optical fiber (1) is located in the hollow needle (4).

13. Process in accordance with Claims 1 to 12, characterized in that several optical fibers are guided through the hollow needle simultaneously.

14. Device for drawing at least one optical fiber through a fabric from a front side of the fabric to a rear side of the fabric, characterized in that at least one hollow needle (4) is mounted such that it is movable in its longitudinal direction, that the hollow needle (4) is formed as a guide for at least one optical fiber (1); that a grasping device (6) gripping an end projecting from the hollow needle (4) is arranged in an area opposite the tip of the hollow needle, and a cutting device (7) severing the optical fiber is positioned in an area opposite the grasping device (6), and at least one drive which controls the device and pushes the optical fiber (1) forward before it is gripped by the grasping device (6) or draws the hollow needle (4) back.

15. Device in accordance with claim 14, characterized in that a working platform (9), on which the fabric (2) is guided, extends between the cutting device (7) and the grasping device (6).

16. Device in accordance with claims 14 and 15, characterized in that a holding-down device (8) facing the grasping device (6) is equipped with reels for guiding the optical fiber (1).

17. Device in accordance with claims 14 to 16, characterized in that the grasping device (6) is designed as a holding-down device (8).

18. Device in accordance with claims 14 to 17, characterized in that the grasping device (6) is arranged so as to be movable horizontally.

19. Device in accordance with claims 14 to 18, characterized in that a fiber transport device (5) comprises two reels, one of which is power-driven, the other being arranged such that it can fold down for the purpose of threading the optical fiber (1) in the hollow needle (4).

20. Device in accordance with claims 14 to 19, characterized in that it possesses several hollow needles (4).

21. Device in accordance with claims 14 to 20, characterized in that it is provided with an automatic control.

22. Device in accordance with claims 14 to 18, characterized in that it is equipped with a telescopically movable hollow needle (4) in a guide tube (10) and a clamping device (11) arranged at the bottom end of the guide tube and holding the optical fiber (1) fast when the hollow needle (4) is drawn back.

23. Device in accordance with claims 14 to 22, characterized in that the cutting device (7) is adjustable in height.

**Revendications**

1. Procédé pour le tirage d'au moins une fibre optique à travers un tissu, caractérisé en ce que au moins une fibre optique (1) passant à travers au moins une canule (4) est tirée au moyen de la canule (4) à partir d'une position de départ en direction du tissu (2), en ce que le tissu (2) est transpercé à l'aide de la canule (4) et que l'extrémité de la fibre optique (1) entourée de la canule (4) est libérée, procédé dans lequel soit la fibre optique (1) est éjectée, soit la canule (4) est retirée et où la fibre optique (1) est maintenue par un dispositif de préhension (6) dans la zone d'extension par rapport à la position de départ, ensuite la canule (4) est tirée du tissu (2) dans la direction de la position de départ et enfin la fibre optique (1) est séparée dans la zone d'extension par rapport à la position de départ devant une pointe de la canule (4)

2. Procédé selon la revendication 1 caractérisé en ce que la fibre optique (1) est mise en réserve sur un rouleau (3) et l'extrémité de la fibre optique (1) provenant du rouleau (3) est tirée dans la canule (4) pour entamer le processus.

3. Procédé selon les revendications 1 et 2 caractérisé en ce que le tissu (2) est conduit avec le côté correspondant à la position de départ sur une plaque de travail (9) équipée d'ouvertures pour le passage de la canule (4)

4. Procédé selon les revendications 1 à 3 caractérisé en ce que un décrochage ou un déplacement du tissu (2) de sa position sur la plaque de travail (9) est empêché par un serre-flanc (8)

5. Procédé selon les revendications 1 à 4 caractérisé en ce que la canule (4) est renvoyée jusqu'à sa position de départ après que la fibre optique (1) ait été saisie par son dispositif de préhension (6).

6. Procédé selon les revendications 1 à 5 caractérisé en ce que la fibre optique (1) est tirée latéralement par le dispositif de préhension (6) jusqu'à un point défini.

7. Procédé selon les revendications 1 à 6 caractérisé en ce que l'extrémité de la fibre est fixée par un dispositif adapté après positionnement par le dispositif de préhension(6).

8. Procédé selon les revendications 1 à 7 caractérisé en ce que les fibres optiques (1) sont fixées au point de passage à travers le tissu (2) de préférence par collage de manière à éviter tout arrachage.

9. Procédé selon les revendications 1 à 8 caractérisé en ce que d'autres fibres, qui passent à travers d'autres points du tissu (2) sont fixées en position à l'aide du dispositif de fixation des fibres (1) au point de passage à travers le tissu (2).

10. Procédé selon les revendications 1 à 9 caractérisé en ce que, après le placement de la fibre optique (1) à un point défini, la fibre (1) est coupée en dessous de la plaque de travail (9) à une distance définie du tissu (2).

11. Procédé selon les revendications 1 à 10 caractérisé en ce que, après le sectionnement de la fibre optique (1), la nouvelle extrémité ainsi formée est tirée dans la canule (4) par le dispositif de transport de la fibre (5).

12. Procédé selon les revendications 1 à 10 caractérisé en ce que, après le sectionnement de la fibre optique (1), la canule (4) est repoussée jusqu'à ce que la nouvelle extrémité de la fibre optique (1) se trouve dans la canule (4).

13. Procédé selon les revendications 1 à 12 caractérisé en ce que plusieurs fibres optiques peuvent être tirées en même temps par la canule.

14. Dispositif pour le tirage d'au moins une fibre optique à travers un tissu de la face avant d'un tissu à la face arrière d'un tissu, caractérisé en ce que au moins une canule (4) est placée de manière mobile dans son sens longitudinal, en ce que la canule (4) est constituée comme un conduit permettant le passage d'au moins une fibre optique (1), en ce que à un endroit opposé à une pointe de la canule se trouve un dispositif de préhension saisissant l'extrémité émergeant de la canule, et que, à un endroit opposé au dispositif de préhension, est disposé un système de sectionnement de la fibre optique ainsi que au moins un entraînement pilotant soit le dispositif d'avancement de la fibre optique (1) avant qu'elle ne soit saisie par le dispositif de préhension (6), soit le retrait de la canule (4).

15. Dispositif selon la revendication 14 caractérisé en ce que une plaque de travail (9) supportant le tissu s'avance entre le dispositif de coupe (7) et le dispositif de préhension (6).

16. Dispositif selon les revendications 14 et 15 caractérisé en ce que un serre-flanc (8) voisin du dispositif d'accrochage (6) est équipé de rouleaux pour diriger la fibre optique.

17. Dispositif selon les revendications 14 à 16 caractérisé en ce que le dispositif de préhension (6) est prévu sous la forme de serre-flanc (8)

18. Dispositif selon les revendications 14 à 17 caractérisé en ce que le dispositif de préhension (6) est mobile dans une direction horizontale.

19. Dispositif selon les revendications 14 à 18 caractérisé en ce que un dispositif de transport de la fibre optique (5) présente deux rouleaux dont un possède un entraînement et dont l'autre se rabat pour permettre l'enfilage de la fibre optique (1) dans la canule (4).

20. Dispositif selon les revendications 14 à 19 caractérisé en ce qu'il présente plusieurs canules (4)

21. Dispositif selon les revendications 14 à 20 caractérisé en ce qu'il présente un pilotage automatique

22. Dispositif selon les revendications 14 à 18 caractérisé en ce qu'il présente une canule mobile de manière téléscopique (4) dans un tube guide (10) et un dispositif de blocage (11) à l'extrémité inférieure du tube qui fixe la fibre optique (1) lors du retrait de la canule (4).

23. Dispositif selon les revendications 14 à 22 caractérisé en ce que le dispositif de sectionnement (7) est réglable en hauteur.

ZEICHNUNG I

ZEICHNUNG II